Europäisches Patentamt

European Patent Office

Office européen des brevets

(11) Veröffentlichungsnummer: **0 445 520 A1**

## (12) EUROPÄISCHE PATENTANMELDUNG

(21) Anmeldenummer: **91101166.6**

(22) Anmeldetag: **30.01.91**

(51) Int. Cl.5: **G01N 21/65**, G01N 21/55

(30) Priorität: **10.02.90 DE 4004088**

(43) Veröffentlichungstag der Anmeldung:
**11.09.91 Patentblatt 91/37**

(84) Benannte Vertragsstaaten:
**AT BE CH DE DK ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Knoll, Wolfgang, Dr.**
**Elsa-Brandstroem-Strasse 18d**
**W-6500 Mainz(DE)**
Erfinder: **Knobloch, Harald**
**Gartenstrasse 16**
**W-6509 Albig(DE)**

(54) **Verfahren zur Untersuchung physikalischer Eigenschaften dünner Schichten.**

(57) Die Anmeldung betrifft ein Verfahren zur Untersuchung physikalischer Eigenschaften dünner Schichten mit Hilfe polarisierten Lichtes, wobei das polarisierte Licht auf ein Schichtsystem trifft, in dem Oberflächenplasmonen angeregt werden, wodurch in der zu untersuchenden Schicht oder dem zu untersuchenden Schichtsystem Raman-gestreutes Licht erzeugt wird, welches durch ein Abbildungssystem auf einen Detektor abgebildet wird.

FIG. 1

$\Theta_i \neq \Theta_0$

EP 0 445 520 A1

## VERFAHREN ZUR UNTERSUCHUNG PHYSIKALISCHER EIGENSCHAFTEN DÜNNER SCHICHTEN

Die Erfindung betrifft ein Verfahren zur Untersuchung physikalischer Eigenschaften dünner Schichten mit Hilfe polarisierten Lichtes, wobei polarisiertes Licht auf ein Schichtsystem trifft, in dem Oberflächenplasmonen angeregt werden. Das erfindungsgemäße Verfahren ermöglicht Raman-spektroskopische Untersuchungen mit geringem apparativen Aufwand.

Oberflächenplasmonen (PSP) sind gebundene, strahlungslose, elektromagnetische Wellen, die sich entlang einer Metall-Dielektrikumgrenzfläche ausbreiten. Ihre Feldstärke weist an der Metalloberfläche ein Maximum auf und fällt exponentiell sowohl in das Metall als auch in das Dielektrikum hinein ab (vgl. H. Raether, in Physics of Thin Films Vol. 9, 145-261, New York 1977).

Das Interesse an Oberflächenplasmonen hat in den letzten Jahren zugenommen, da sie in den verschiedenen oberflächenspektroskopischen Untersuchungen an Adsorbaten und ultradünnen Schichten/Schichtsystemen erfolgreich zur Feldverstärkung eingesetzt werden (vgl. R. M. Corn, M. R. Philpott, J. Chem. Phys. 80 (10), 5245-5249 (1984)).

Ramanstreuung ist eine Lichtstreumethode, wobei spektrale Lage und Intensität des nichtresonant gestreuten Lichtes (hier PSP) Aussagen über molekulare Struktur der untersuchten Probe erlauben (vgl. Knobloch, Duschl, Knoll, J. Chem. Phys. 91 (7), 3810-3814 (1989)); das Raman-gestreute Licht ist gegenüber dem eingestrahlten spektral verschoben (Stokes Shift).

Aufgabe der Erfindung ist es, eine Methode aufzuzeigen, die es erlaubt Raman-spektroskopische Untersuchungen an ultradünnen Schichten/Schichtsystemen vorzunehmen, die mit einem Minimum an optischen Bauteilen auskommen.

Während bei den bisher bekannten Verfahren für Raman-spektroskopische Untersuchungen spezielle Geräte zur spektralen Analyse, z.B. Monochromatoren benötigt wurden, kann für das erfindungsgemäße Verfahren auf einen Monochromator oder sonstige Geräte zur spektralen Analyse verzichtet werden.

Das erfindungsgemäße Verfahren erlaubt es, das von der zu untersuchenden Schicht/Schichtsystem Raman-gestreute Licht direkt, mit einer Linse, auf eine Kamera abzubilden. Dabei findet die oberflächenverstärkte Raman-spektroskopie Anwendung, indem die Winkeldispersions- und Polarisationseigenschaften der Oberflächenplasmonen angewandt werden (vgl. Knoll et al. J. Chem. Phys. 77 (5), 2254 (1982)).

Überraschenderweise gelingt es mit einem Verfahren zur Raman-spektroskopischen Untersuchung ultradünner Schichten/Schichtsysteme (Dicke < 0,1 $\mu$m), bei dem die zu untersuchenden Schichten auf einen festen Träger aufgebracht sind und mittels oberflächenverstärkter Raman-spektroskopie, in Abhängigkeit des Einfalls- und des Beobachtungswinkels untersucht werden, sehr vorteilhaft, die gestellte Aufgabe zu lösen.

Gegenstand der vorliegenden Erfindung ist ein Verfahren zur Untersuchung der physikalischen Eigenschaften dünner Schichten mit Hilfe polarisierten Lichtes, das dadurch gekennzeichnet ist, daß das polarisierte Licht auf ein Schichtsystem trifft, in dem Oberflächenplasmonen angeregt werden, wodurch in der zu untersuchenden Schicht oder dem zu untersuchenden Schichtsystem Raman-gestreutes Licht erzeugt wird, welches durch ein Abbildungssystem auf einen Detektor abgebildet wird.

Die Oberflächenplasmonen werden dabei im allgemeinen an einer Metall- oder Halbleiter-Dielektrikum-Grenzfläche angeregt.

Zur Anregung von Oberflächenplasmonen wird als Kopplungsanordnung insbesondere ein Prisma oder eine Gitterstruktur auf einer Festkörperoberfläche verwendet.

Bevorzugte Ausführungsformen des erfindungsgemäßen Verfahrens bestehen auch darin, daß auf die Kopplungsanordnung eine Metall- oder Halbleiterschicht und/oder die zu untersuchende Schicht oder das zu untersuchende Schichtsystem aufgebracht wird, oder daß eine Metall- oder Halbleiterschicht und/oder die zu untersuchende Schicht auf einen festen Träger aufgebracht sind und dieser in einem Abstand von 100-400 nm zur Basisfläche eines Prismas angebracht ist.

Als Abbildungssystem wird vorzugsweise eine Sammellinse, ein Linsensystem oder ein Mikroskopobjektiv verwendet.

Zweckmäßig ist es, einen zweidimensionalen Detektor sowie als Detektor eine rauscharme Kamera, insbesondere eine CCD-Kamera, deren CCD-Chip mit flüssigem Stickstoff gekühlt wird, einzusetzen.

Gegenstand der Erfindung ist außerdem ein Verfahren zur Abbildung des zu untersuchenden strukturierten Schichtsystems im Raman-verschobenen Spektralbereich, wobei die Struktur der zu untersuchenden Schicht unter Ausnutzung der Winkeldispersion von Oberflächenplasmonen als Kontrastmechanismus abgebildet wird, sowie die Verwendung des erfindungsgemäßen Verfahrens für die Raman-Spektroskopie, wobei an dem zu untersuchenden Schichtsystem die Winkeldispersion von Oberflächenplasmonen zur spektralen Auflösung der Raman-Linien benutzt wird.

Das erfindungsgemäße Verfahren eignet sich also sowohl zur Raman-spektroskopischen Untersuchung als auch zum Abbilden kontrastarmer aber Raman-aktiver Proben aller Arten dünner organischer Filme; wie z.B. Lipid-Monoschichten, Cd-arachidat, Polyglutamaten und Polysilanen.

Oberflächenplasmonen werden im allgemeinen mit einer Kopplungsanordnung, wie einer Otto-, Kretschmann- oder Gitteranordnung durch monochromatisches, paralleles, polarisiertes Licht angeregt. Als Lichtquelle dient vorzugsweise ein Argonionenlaser.

In der Gitteranordnung wird die zu untersuchende Schicht/Schichtsystem auf eine Metall- oder Halbleiterschicht aufgebracht, deren Oberfläche eine Gitterstruktur aufweist. Die Gitterstruktur wird, vorzugsweise mittels holographischer oder lithographischer Verfahren, auf die Oberfläche des darunterliegenden Glassubstrats aufgebracht.

Die Kopplungsbedingungen für den anregenden Lichtstrahl, sowie für das um die Stokes Shift verschobene Raman-gestreute Licht sind durch die Winkeldispersionseigenschaften der PSP gegeben.

Die spektrale Analyse des Raman-gestreuten Lichts erfolgt unter Ausnutzung der Winkeldispersionseigenschaften der PSP.

Die Schichtdicken der zu untersuchenden Schichten bzw. Schichtsysteme liegen im allgemeinen bei < 0,1 $\mu$m, vorzugsweise < 50 nm, beispielsweise zwischen 5 und 40 nm.

Nach dem erfindungsgemäßen Verfahren lassen sich folgende Eigenschaften dünner, insbesondere ultradünner Schichten untersuchen: Optische Schichtdicke (nxd), Brechungsindex (n), sowie besonders vorteilhaft die molekularen Polarisierbarkeiten der zu untersuchenden Schicht (z.B. monomolekularer Filme und Multischichtsysteme).

Die zu untersuchenden Schichten bzw. Schichtsysteme können nach üblichen Methoden, wie z.B. mittels der Langmuir-Blodgett-Technik, durch Aufschleudern (Spin-coating von Lösungen), Aufdampfen und/oder Adsorption aus der Gas- oder Flüssigphase auf Metall- oder Halbleiterschichten aufgebracht werden, wobei als Metallschichten im allgemeinen beispielsweise Gold- und insbesondere Silberschichten in Frage kommen.

Die Langmuir-Blodgett-Technik zur Herstellung dünner Schichten und Mehrlamellensystemen kann beispielsweise der Publikation von H. Kuhn, D. Möbius und H. Bücher in Physical Methods of Chemistry, Hrsg. A. Weissberger und B.W. Rossitter (Wiley, N.Y. 1972), Teil III B., Kap. VII entnommen werden.

Dazu wird die Lösung der zu untersuchenden Substanz, z.B. des zu untersuchenden Lipids in einem niedrigsiedenden organischen Lösungsmittel, z.B. in Chloroform, an der Grenzfläche Wasser/Luft gespreitet und nach Verdunstung des Lösungsmittels in üblicher Weise nach der Langmuir-Blodgett-Technik auf eine metallische Schicht eines festen Schichtträgers, beispielsweise eines mit Silber bedampften entsprechend strukturierten, z.B. mit einem holographischen Gitter bestimmter Periodizität und Modulation versehenen, Glasobjektträgers übertragen.

Zusätzlich kann zur spektralen Analyse und/oder zur Unterdrückung von Streulicht ein System optischer Filter herangezogen werden.

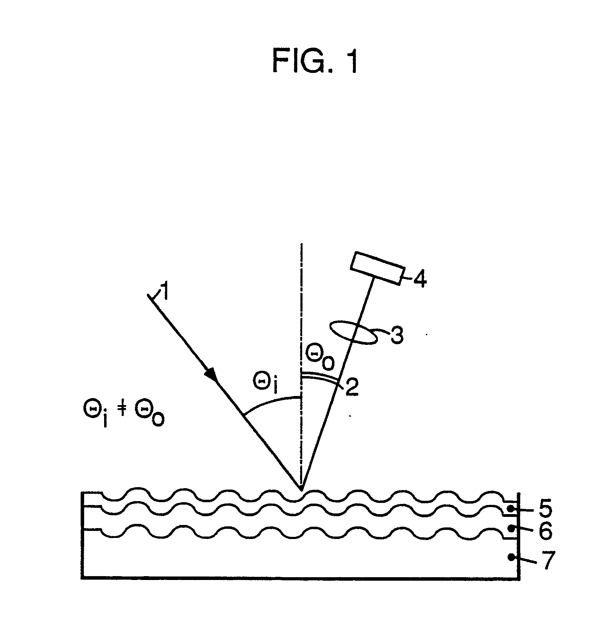

Der Aufbau der erfindungsgemäß eingesetzten Apparatur wird schematisch in Fig. 1 dargestellt. Darin bedeutet 1 = einfallender Laserstrahl; 2 = Ramangestreutes Licht; 3 = Linse (Mikroskopobjektiv); 4 = Detektor (CCD-Kamera); 5 = zu untersuchende Schicht; 6 = Metallschicht; 7 = Glasobjektträger mit Gitterstruktur.

Die nach den oben angegebenen Methoden präparierte Probe wird mittels oberflächenplasmonenverstärkter Ramanspektroskopie untersucht. Dabei koppeln die PSP über das Gitter/Prisma an das eingestrahlte Licht und werden Raman-gestreut. Dieses Raman-gestreute Licht wird mittels einer Linse auf eine, vorzugsweise mit flüssigem Stickstoff gekühlte, CCD-Kamera abgebildet, aufgezeichnet und kann beispielsweise auf magnetischen Datenträgern gespeichert werden.

Geeignete CCD-Kameras werden beispielsweise in D. N. Batchelder, ESN-European Spectroscopy News, 80, 28-33 (1988) beschrieben. Das erfindungsgemäße Verfahren erlaubt es, das von der zu untersuchenden Schicht Raman-gestreute Licht direkt auf eine Kamera abzubilden.

Beispiel 1

8 Schichten Cadmiumarachidat (CdA) werden mittels der Langmuir-Blodgett-Technik auf einen Glasobjektträger aufgebracht, dessen mit einem holographischen Gitter (Periodiztät: 0,5 $\mu$m, Modulation: 5 nm) versehene Oberfläche mit einer 100 nm dicken Silberschicht bedampft wurde.

Mittels einer UV-Lampe und einer Maske wird auf der Probe ein 1 mm breiter Streifen desorbiert (Belichtungsdauer: 30 Minuten).

Unter einem Einfallswinkel von 20° koppelt das Licht des Argonionenlasers ($\lambda$ = 476,5 nm) an die Plasmonen. Das Raman-gestreute Licht wird unter einem Beobachtungswinkel von 2° mittels einer Linse eingesammelt und durch einen Monochromator auf eine stickstoffgekühlte CCD-Kamera abgebildet. Das mit der CCD-Kamera aufgenommene Bild läßt deutlich beschichtete und desorbierte Bereiche erkennen.

Erfüllt der einfallende Lichtstrahl die Kopplungsbedingungen der PSP nicht, so läßt sich kein Bild und somit keine Oberflächenstruktur erkennen.

Erfolgt der experimentelle Aufbau, sowie die Präparation der Probe wie oben ausgeführt, jedoch halbseitig mit deuteriertem bzw. protoniertem CdA. so lassen sich auf dem mit der CCD-Kamera erhaltenen Bild deutlich protonierte und deuterierte Bereiche unterscheiden.

Es läßt sich somit, trotz gleicher optischer Eigenschaften der beiden verwendeten Substanzen, ein Materialkontrast darstellen.

Beispiel 2

16 Schichten Cadmiumarachidat (CdA) werden mittels der Langmuir-Blodgett-Technik auf einen Glasobjektträger aufgebracht, dessen mit einem holographischen Gitter (Periodizität: 0,5 $\mu$m, Modulation: 5 nm) versehene Oberfläche mit einer 100 nm dicken Silberschicht bedampft wurde. Das so präparierte Schichtsystem wird mittels UV-Desorbtion (Quecksilberdampflampe) durch eine Maske hindurch strukturiert. (Belichtungsdauer: 1 Stunde).

Unter einem Einfallswinkel von 24° koppelt das Licht des Argonionen-Lasers ($\lambda$ = 476,5 nm) an ds Plasmonenfeld. Das Raman-gestreute Licht wird unter einem Beobachtungswinkel von 6° mittels eines Linsensystems, sowie eines Systems von Filtern (Langpass: Schott 0G 515; Interferenzfilter: Pörschke TCV-072) auf eine stickstoffgekühlte CCD-Kamera abgebildet.

Das mit der CCD-Kamera aufgenommene Bild läßt deutlich beschichtete und desorbierte Bereiche erkennen.

Erfüllt der einfallende Lichtstrahl die Kopplungsbedingungen der PSP nicht, so läßt sich kein Bild und somit keine Oberflächenstruktur erkennen.

Auf die zu untersuchende Probe (Schichtsystem) fällt unter dem PSP-Resonanzwinkel $\Theta_i$ ein Laserstrahl, so daß PSP und eingestrahltes Licht optimal koppeln. Unter dem Beobachtungswinkel $\Theta_o$ wird die Oberflächenstruktur der Probe durch ein Linsen- und Filtersystem direkt auf eine CCD-Kamera abgebildet.

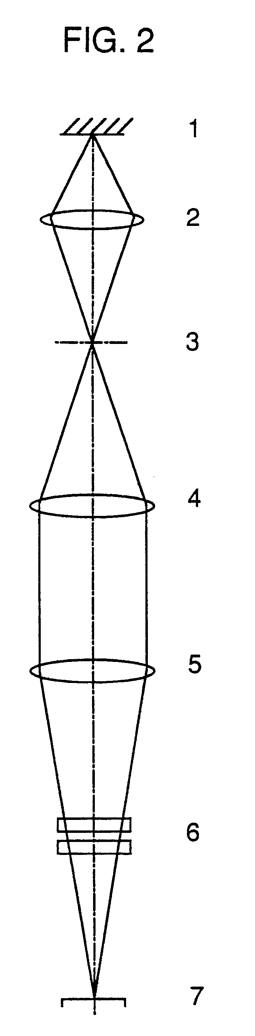

Einen geeigneten apparativen Aufbau zeigt Fig. 2. Dabei bedeuten:

1 = Probe, Schichtsystem; 2, 4, 5 = Linsen; 3 = Blende; 6 = Filter (Filtersystem); 7 = CCD Kamera.

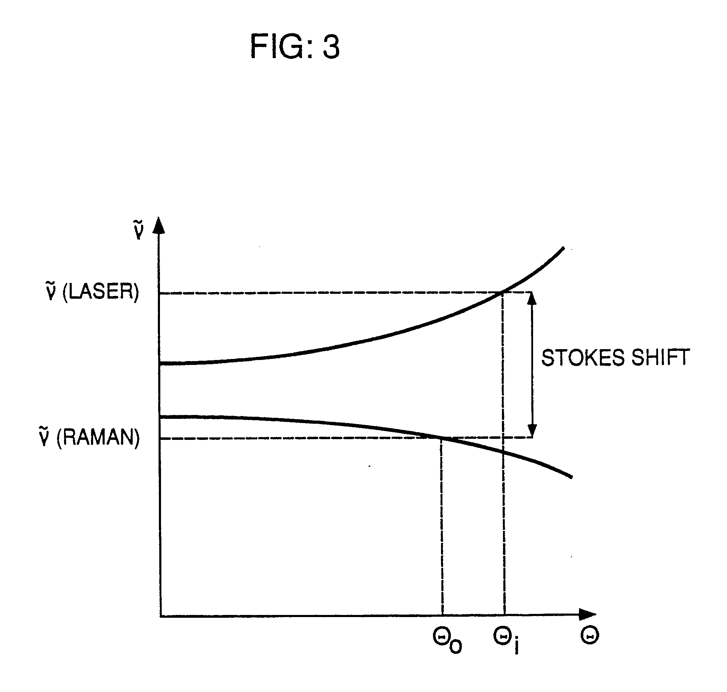

Fig. 3 zeigt die Dispersion der Oberflächenplasmonen bei Gitterkopplung Dabei bedeuten:

$$\tilde{\nu} \text{ (Laser)} = \text{Wellenzahl des eingestrahlten Laserlichts;}$$
$$\tilde{\nu} \text{ (Raman)} = \text{Wellenzahl des Raman-gestreuten Lichts;}$$
$$\Theta_i \qquad = \text{PSP-Resonanzwinkel für eingestrahltes Laserlicht;}$$
$$\Theta_o \qquad = \text{PSP-Resonanzwinkel für Raman-gestreutes Licht,}$$
$$\text{Beobachtungswinkel.}$$

**Patentansprüche**

1. Verfahren zur Untersuchung der physikalischen Eigenschaften dünner Schichten mit Hilfe polarisierten Lichtes, dadurch gekennzeichnet, daß das polarisierte Licht auf ein Schichtsystem trifft, in dem Oberflächenplasmonen angeregt werden, wodurch in der zu untersuchenden Schicht oder dem zu untersuchenden Schichtsystem Raman-gestreutes Licht erzeugt wird, welches durch ein Abbildungssystem auf einen Detektor abgebildet wird.

2. Verfahren nach Anspruch 1, dadurch gekennzeichnet, daß Oberflächenplasmonen an einer Metall- oder Halbleiter-Dielektrikum-Grenzfläche angeregt werden.

3. Verfahren nach Anspruch 2, dadurch gekennzeichnet, daß zur Anregung von Oberflächenplasmonen eine Kopplungsanordnung verwendet wird.

4. Verfahren nach Anspruch 3, dadurch gekennzeichnet, daß als Kopplungsanordnung ein Prisma verwendet wird.

5. Verfahren nach Anspruch 3, dadurch gekennzeichnet, daß als Kopplungsanordnung eine Gitterstruktur auf einer Festkörperoberfläche verwendet wird.

6. Verfahren nach Anspruch 3, dadurch gekennzeichnet, daß auf die Kopplungsanordnung eine Metall- oder Halbleiterschicht und/oder die zu untersuchende Schicht oder das zu untersuchende Schichtsystem aufgebracht wird.

7. Verfahren nach Anspruch 3 oder 4, dadurch gekennzeichnet, daß eine Metall- oder Halbleiterschicht und die zu untersuchende Schicht auf einen festen Träger aufgebracht sind und dieser in einem Abstand von 100-400 nm zur Basisfläche eines Prismas angebracht ist.

8. Verfahren nach Anspruch 1, dadurch gekennzeichnet, daß zur Streulichtunterdrückung zusätzlich ein System optischer Filter verwendet wird.

9. Verfahren nach Anspruch 1, dadurch gekennzeichnet, daß als Abbildungssystem eine Sammellinse, ein Linsensystem oder ein Mikroskopobjektiv verwendet wird.

10. Verfahren nach Anspruch 1, dadurch gekennzeichnet, daß der Detektor zweidimensional ist.

11. Verfahren nach Anspruch 10, dadurch gekennzeichnet, daß der Detektor eine rauscharme Kamera ist.

12. Verfahren nach Anspruch 11, dadurch gekennzeichnet, daß die Kamera eine CCD-Kamera ist, deren CCD-Chip mit flüssigem Stickstoff gekühlt wird.

13. Verfahren nach Anspruch 1, dadurch gekennzeichnet, daß zur Abbildung des zu untersuchenden strukturierten Schichtsystems im Raman-verschobenen Spektralbereich die Struktur der zu untersuchenden Schicht unter Ausnutzung der winkeldispersion von Oberflächenplasmonen als Kontrastmechanismus abgebildet wird.

14. Verfahren nach Anspruch 1 zur Verwendung für die Ramanspektroskopie, dadurch gekennzeichnet, daß an dem zu untersuchenden Schichtsystem die winkeldispersion von Oberflächenplasmonen zur spektralen Auflösung der Raman-Linien benutzt wird.

# FIG. 1

$\Theta_i \neq \Theta_0$

# FIG. 2

# FIG: 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-C-3 720 387 (B. ROTHENHAEUSLER)<br>* ganze Schrift * | 1-14 | G 01 N 21/65<br>G 01 N 21/55 |
| Y,D | JOURNAL OF CHEMICAL PHYSICS Band 91, Nr. 7, 1. Oktober 1989, Seiten 3810-3814, US; H. KNOBLOCH et al.: "On the laser-wavelength dependence of plasmon surface polariton field-enhanced Raman spectroscopy"<br>* page 3811 * | 1-14 | |
| A | JOURNAL OF APPLIED PHYSICS Band 66, Nr. 10, 15. November 1989, Seiten 4832-4836, New York, US; W. HIKKEL et al.: "Surface plasmon microscopic characterization of external surfaces"<br>* Absatz II * | 1 | |
| A,D | JOURNAL OF CHEMICAL PHYSICS Band 80, Nr. 10, 15. Mai 1984, Seiten 5245-5249, US; R.M. CORN et al.: "Surface plasmon-enhanced Raman scattering at thin silver films"<br>* ganze Schrift * | 1 | |
| A,D | ESN - EUROPEAN SPECTROSCOPY NEWS Band 80, 1988, Seiten 28-33; D.N. BATCHELDER: "Multichannel Raman Spectroscopy with a Cooled CCD Imaging Detector"<br>* Seite 28 * | 1,10-12 | RECHERCHIERTE SACHGEBIETE (Int. Cl.5)<br><br>G 01 N<br>G 01 B |
| P,A | EP-A-0 403 769 (BASF AG)<br>* Ansprüche 1,6 * | 1,7 | |

Der vorliegende Recherchenbericht wurde für alle Patentansprüche erstellt

| Recherchenort | Abschlußdatum der Recherche | Prüfer |
|---|---|---|
| Berlin | 31 Mai 91 | BRISON O.P. |